# EUROPEAN PATENT SPECIFICATION

(11) **EP 2 526 689 B1**
(45) Date of publication and mention of the grant of the patent: **14.10.2015**
(21) Application number: 11707909.5
(22) Date of filing: 19.01.2011
(51) Int. Cl.: H04N 7/025, H04N 7/24, H04N 21/235, H04N 21/435

(54) **METHOD FOR TRANSPORTING INFORMATION AND/OR APPLICATION DATA INSIDE A DIGITAL VIDEO STREAM, AND RELATIVE DEVICES FOR GENERATING AND PLAYING SUCH VIDEO STREAM**
VERFAHREN ZUM TRANSPORTIEREN VON INFORMATIONEN UND/ODER ANWENDUNGSDATEN IN EINEM DIGITALEN VIDEOSTREAM SOWIE ENTSPRECHENDE VORRICHTUNGEN ZUR ERZEUGUNG UND ABSPIELUNG EINES SOLCHEN VIDEOSTREAMS
PROCÉDÉ DE TRANSPORT D'INFORMATIONS ET/OU DE DONNÉES D'APPLICATION DANS UN FLUX VIDÉO NUMÉRIQUE, ET DISPOSITIFS ASSOCIÉS POUR GÉNÉRER ET REPRODUIRE UN TEL FLUX VIDÉO

(30) Priority: 22.01.2010 IT TO20100042
(43) Date of publication of application: 28.11.2012
(73) Proprietor: S.I.SV.EL. Societa' Italiana per lo Sviluppo dell'Elettronica S.p.A., 10060 None (TO) (IT)
(72) Inventor: BALLOCCA, Giovanni, 10131 Torino (IT); D'AMATO, Paolo, 00195 Roma (IT); CELIA, Saverio, 10040 Rivalta Di Torino (TO) (IT)
(74) Representative: Camolese, Marco
(86) International application number: PCT/IB2011/050243
(87) International publication number: WO 2011/089556

(56) References cited:
- WO-A2-03/003737
- US-A- 5 650 825
- US-A1- 2007 296 859
- US-A1- 2009 167 941
- "What if it's not a multiple of 16?", , May 2008 (2008-05), XP002600002, Retrieved from the Internet: URL:http://forum.doom9.org/archive/index.p hp/t-137587.html [retrieved on 2010-09-09]

## Description

### - TECHNICAL FIELD -

The present invention relates in general to the production and display of digital video contents.

In particular, the invention relates to the use of video coding and decoding techniques for transporting information and/or application data inside digital video contents, as well as to the devices used for generating and playing such contents.

The invention is preferably and advantageously applicable to the coding and decoding of digital stereoscopic video streams, and is therefore implemented in devices used for generating and playing said stereoscopic video streams.

### - PRIOR ART -

As known, the distribution of video contents in digital format requires the adoption of coding (compression) techniques in order to reduce the bit rate prior to broadcasting or storing such contents into mass memories.

To play such contents, the user will then employ a suitable decoding device which will apply decompression techniques usually consisting of operations inverse to those carried out by the encoder.

Said video contents may have different formats. For example, archive materials are characterised by the historical 4:3 format, while more recent contents may be in the 16:9 format. Contents derived from cinematographic productions may have even wider formats. Such contents may be played on display devices characterised by different screen formats. As a consequence, the distribution of such contents on a specific transport network or mass memory involves the adoption of display adaptation and optimisation techniques, which may also depend on the spectator's preferences.

For example, 4:3 contents can be displayed on 16:9 display devices by inserting two vertical black bands, if the spectator prefers to see an undeformed image.

For the display device to be able to properly apply such adaptation and optimisation techniques, it must be provided with information describing the format of the received image.

This is not only necessary in the world of two-dimensional (2D) contents; in fact, this requirement is felt even more in regard to stereoscopic contents (3D).

For example, stereoscopic video streams may contain composite images in which a right image and a left image are suitably arranged and are intended for the right eye and the left eye, respectively, of the user watching the video. In the "side-by-side" format, the two right and left images are subsampled horizontally and are so arranged as to occupy the left half and the right half of the composite image. In the "top-bottom" format, the right and left images are subsampled vertically and are arranged in the upper and lower halves of the composite image.

Display devices, in turn, employ different techniques to display the stereoscopic image. In order to allow said devices to display videos correctly according to the technique in use, it is appropriate to signal the composite image format within the video stream to be displayed. In fact, in order to be able to reconstruct the right and left images, the decoder has to know how they are arranged inside the composite image; otherwise, it will not be able to reconstruct them and allow the 3D contents to be correctly displayed.

Many methods are available today for entering information and/or application data into video streams.

In analog television, for example, data of this kind was entered into the vertical blanking intervals. Switching to digital television, these blanking intervals have been eliminated, and the data is transported by suitable sections of the video stream separate from the video part. For example, suitable signalling tables are known to be used within the MPEG2 transport stream, which tables contain information about the format of 2D images.

Documents US-A-2009/0167941 and US-A-2007/0296859 disclose methods of inserting non-image information into additional lines of a frame of a digital video signal. However, in such documents there is no reference to video signal encoding.

Document US-A-5650825 discloses putting private information in stuffing bytes of a video transport stream. However, the stuffing bytes are not inserted in image frames to be encoded.

Headers are also known to be used for transporting signalling data inside the encoded digital video stream.

This information and/or application data is present and usable only in that section of the distribution chain between the encoder and the decoder. At production level, in fact, video contents are not compressed (or are only compressed at low compression rates) in order to allow them to be subsequently processed or played without any loss in quality, even at a reduced frequency (slow-motion display).

### - OBJECTS AND BRIEF DESCRIPTION OF THE INVENTION -

It is an object of the present invention to provide an alternative method and an alternative system for transporting information and/or application data within a digital video content. In particular, the present invention aims at providing a data transport method which can be applied without distinction to 2D and 3D contents.

It is another object of the present invention to provide a method and a system for transporting information and/or application data which allow such data to be used even when producing digital video contents.

These and other objects of the present invention, which is set out in the appended claims, are achieved through a method and a system for transporting information and/or application data within a video stream (and devices implementing such methods) incorporating the features set out in the appended claims, which are intended as an integral part of the present description.

In particular, one idea at the basis of the present invention is to enter data, in particular information about the characteristics of the digital stereoscopic video stream, e.g. the format thereof, into some areas of the frames that constitute the video stream. In particular, information and/or application data is entered into frame lines containing no useful visual information, i.e. information belonging to the image to be displayed. In this way, the information and/or application data travels together with the image (also contained in the frame) and can thus resist to any transmission system changes which might cause the loss of the metadata associated with the video.

Since the information and/or application data is not mixed with the pixels of the image to be displayed, the information and/or application data is not visible and does not disturb the spectator.

Advantageously, the information and/or application data is entered into the first or last lines of the frame, so as to allow the visual information (e.g. composite image) to be easily separated from the non-visual information (information and/or application data).

The choice of entering the information and/or application data into the first or last eight lines is especially suited to the case of H.264 compression of high-definition contents (whether 2D or 3D). Said H.264 coding is described in the ITU-T document "H.264 Advanced video coding for generic audiovisual services".

According to the H.264 coding format, each image constituting the video stream is broken up into so-called "macroblocks" of 16x 16 pixels in size. Each macroblock contains a 16x16 pixel luminance matrix, whereas 8x8-pixel matrices covering the same area as the luminance matrix are used for the two chrominance signals (which have a lower resolution). Consequently, a 1920x1080 pixel image will be represented by a matrix of 1920x1088 pixels, i.e. with eight lines added at the bottom, necessary because 1080 is not a number divisible by sixteen, whereas each image must be broken up into a whole number of macroblocks. The invention therefore uses the eight lines not occupied by the actual image to transmit the information and/or application data.

Further objects and advantages of the present invention will become more apparent from the following description of a few embodiments thereof, which are supplied by way of non-limiting example.

### - BRIEF DESCRIPTION OF THE DRAWINGS -

Some preferred and advantageous embodiments will now be described by way of non-limiting example with reference to the annexed drawings, wherein:
- Fig. 1 shows a flow chart of the various steps from generation to fruition of video contents;
- Fig. 2 shows a system for producing and distributing a stereoscopic video stream according to a first embodiment of the present invention;
- Figs. 3a and 3b show two examples of a system for playing a stereoscopic video stream according to the present invention;
- Fig. 4 shows a system for producing and distributing a stereoscopic video stream according to a second embodiment of the present invention;
- Fig. 5 shows a system for producing and distributing a stereoscopic video stream according to a third embodiment of the present invention;
- Fig. 6 shows a system for producing and distributing a stereoscopic video stream according to a fourth embodiment of the present invention;
- Fig. 7 shows a system for producing and distributing a stereoscopic video stream according to a fifth embodiment of the present invention;
- Fig. 8 shows a system for producing and distributing a stereoscopic video stream according to a sixth embodiment of the present invention;
- Fig. 9 shows a system for producing and distributing a stereoscopic video stream according to a seventh embodiment of the present invention.

The figures show different aspects and embodiments of the present invention and, where appropriate, similar structures, components, materials and/or elements in the various drawings are designated by similar reference numerals.

### - DETAILED DESCRIPTION OF THE INVENTION -

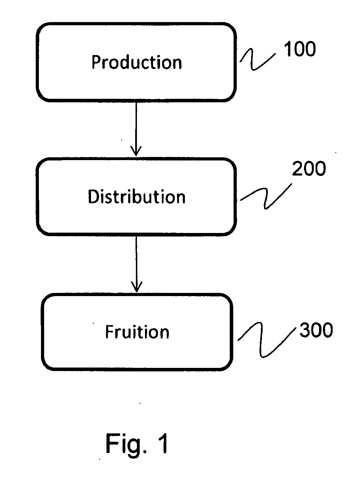

Fig. 1 schematically shows the process from generation to fruition of digital video contents.

In a first step 100 the contents are generated and processed; this step is called production and may include steps such as image acquisition by means of video cameras, creation of video contents by computer graphics, mixing, editing the acquired images and recording them into a high-quality master (i.e. with no or low compression).

Subsequently the video contents so produced are encoded in order to reduce the bit rate and allow them to be recorded for the user (e.g. on optical media such as DVDs or Blu-Rays) or to be distributed through a broadcasting or telecommunications network. This step is called distribution, and is designated by reference numeral 200 in Fig. 1.

A final step is then carried out, referred to as fruition step 300 for the purposes of the present description, in which the distributed video contents are decoded by suitable decoders (e.g. DVD readers or set-top-boxes) and displayed on a screen.

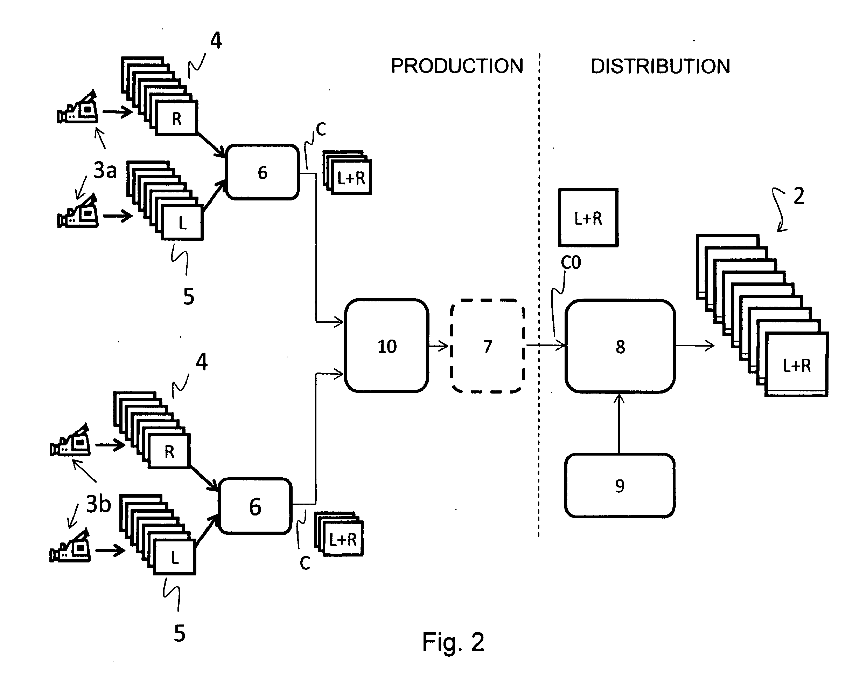

Fig. 2 schematically shows a system for generating stereoscopic video streams 2 according to a first embodiment of the present invention. This figure illustrates some of the technical items that contribute to the production and distribution steps described above with reference to Fig. 1.

The system comprises two pairs of video cameras 3a and 3b; of course, this number of pairs of video cameras is only a non-limiting example, since it may range from a minimum number of one pair of video cameras to ten pairs of video cameras and even more. Likewise, the pair of video cameras may be integrated into a single device capable of acquiring two images.

For each pair, the two video cameras acquire images from two different perspectives. The video cameras then generate a right image sequence 4 and a left image sequence 5, which are received by a multiplexer 6 and entered into frames of corresponding video streams. The multiplexer 6 combines one pair of right and left images belonging to the sequences 4 and 5 into a composite image C which is then outputted to a direction mixer 10. In one embodiment, the composite image C generated by the multiplexer 6 is a 1080x1920 pixel image.

The output signal of the mixer 10 may be sent directly to the encoder 8 for compression or, prior to coding, it may be recorded and subjected to further post-production processing. For this reason, in Fig. 2 the editing and post-production system 7 used for processing the composite image is indicated by a dashed line.

The composite image, possibly processed by the system 7, is supplied to an encoder 8, which compresses it and encodes it into a format suitable for transmission and/or recording.

In a preferred embodiment, the encoder 8 is an H.264 encoder appropriately modified to enter data (e.g. signalling) into the video stream, as will be described in detail below.

The encoder 8 then generates a video stream comprising a sequence of frames transmitted by means of 1088x1920 matrices, in which the first 1080 lines contain the input composite image (C0) received and one or more of the last eight lines contain the information and/or application data.

In the example of Fig. 2, the system comprises means 9 which provide the encoder 8 with the information to be entered into the frame as information and/or application data.

In one embodiment, the means 9 are means that allow the information and/or application data to be manually entered into the frame; e.g. such means may be a personal computer controlled by a user for manually entering the data to be placed into the frame. Alternatively, the insertion means 9 may be limited to a data entry device, such as a keyboard or a touch-screen input peripheral, suitably connected to the encoder 8 so as to allow the user to provide the information that will have to be carried in the frames by the video stream.

The information supplied to the encoder 8 may be of various kinds and have different functions. In particular, such information is used by the decoder to reconstruct the right and left images, and therefore it may include frame packaging information (i.e. the arrangement of the right and left images in the composite image).

When it receives the above information from the insertion means 9, the encoder 8 outputs a video stream that includes both the input composite image and the information and/or application data that will allow the decoder to reconstruct the right and left images, so that they can be correctly displayed.

The stereoscopic video stream 2 generated by the encoder 8 may then be recorded on a suitable medium (DVD, Blu-ray, mass memory, hard disk, etc.) or transmitted over a communication network such as a broadcasting or telecommunications network.

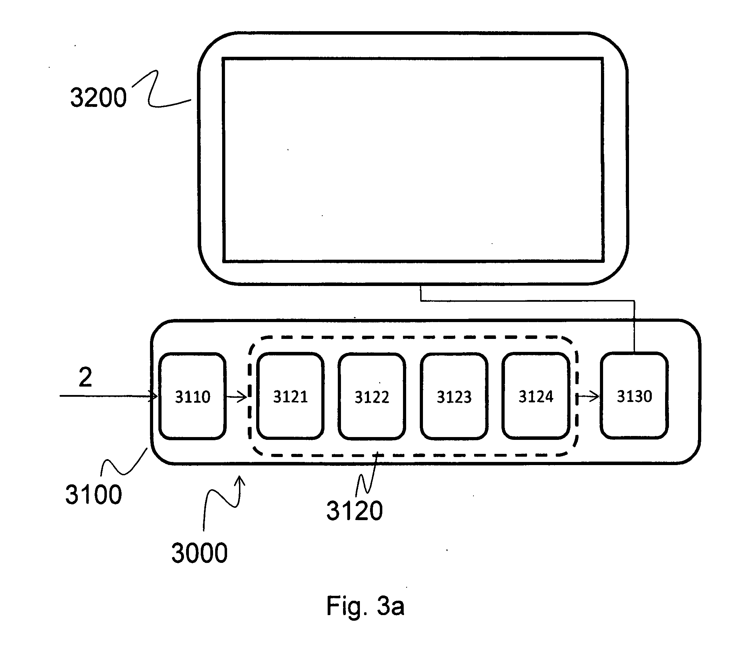

The output signal, which in the example of Fig. 2 is coded according to the current specifications of the H.264 standard, contains indications (cropping window, i.e. the window that delimits the image) that instruct the decoder to properly delimit (crop) the image at decoding time. According to a preferred embodiment, the encoder 8 inserts into the metadata a suitable piece of information to notify the decoder that the additional lines must be analysed before being discarded. Such metadata may, for example, be placed in suitable data packets such as the NAL (Network Abstraction Layer) units of H.264 coding. Let us now tackle the other end of the distribution chain, i.e. the reception and display/reproduction side. Fig. 3a schematically shows a system 3000 for playing video contents produced and distributed by the system of Fig. 2.

The system 3000 comprises a decoder 3100 which acquires the video stream 2 through an acquisition block 3110. The acquisition block 3110 may comprise one or more of the following: a tuner for receiving a video stream broadcast over the air (e.g. via a terrestrial or satellite network), a data input for receiving a video stream transmitted by cable (coaxial cable, optical fibre, duplex cable or the like), a reader for reading a video stream recorded as a video signal on an optical medium (e.g. DVD or Blu-Ray) or on a mass memory.

The video stream acquired by the block 3110 is decoded by the decoding block 3120, in particular a modified H.264 decoder, which outputs two (right and left) image sequences extracted from the decoded video stream 2.

The decoding block 3120 comprises a unit 3121 for analysing the metadata contained in the video stream, one or more registers 3122 for temporarily storing the received frames (e.g. I, B or P type images in H.264 coding), a frame reconstruction unit 3123 for reconstructing the composite images contained in the frames and arranging them in the correct time order, a right and left image extraction unit 3124 for extracting the right and left images contained in the reconstructed composite images on the basis of non-visual information (information and/or application data) contained in the received frames. The decoder 3100 also comprises an output interface 3130 that provides the display device 3200 with the right and left image sequences extracted from the video stream 2.

The interface 3130 may be an HDMI (High Definition Multimedia Interface), an interface outputting two video streams (one for the right image sequence and one for the left image sequence), e.g. two VGA or XVGA streams, or an interface outputting two RGB streams.

The embodiment described above with reference to Figs. 2 and 3a, wherein the metadata includes a piece of information about the presence of information and/or application data in the additional lines, offers the advantage that, if such data is absent, the decoder may omit to analyse it. On the other hand, this solution implies an increased complexity of the operations performed by the encoder, as well as a more complex stream decoding process. In an alternative embodiment, the encoder adds no metadata to the coded stream, leaving it up to the decoder to analyse the content of the additional lines before discarding them. This solution simplifies the encoder and the structure of the coded video stream, but increases the computational load borne by the decoder, and in particular by the extraction unit 3124, which, in order to extract the right and left images, must first analyse the content of the additional lines and/or columns containing the information and/or application data.

In the absence of dedicated metadata, the information and/or application data may be searched, for example, in those frame lines and/or columns which (as indicated by the metadata, such as the cropping window metadata) do not concur in the reconstruction of the image at decoder level. In one embodiment, the data is searched in those additional lines and/or columns that contain non-uniform pixels.

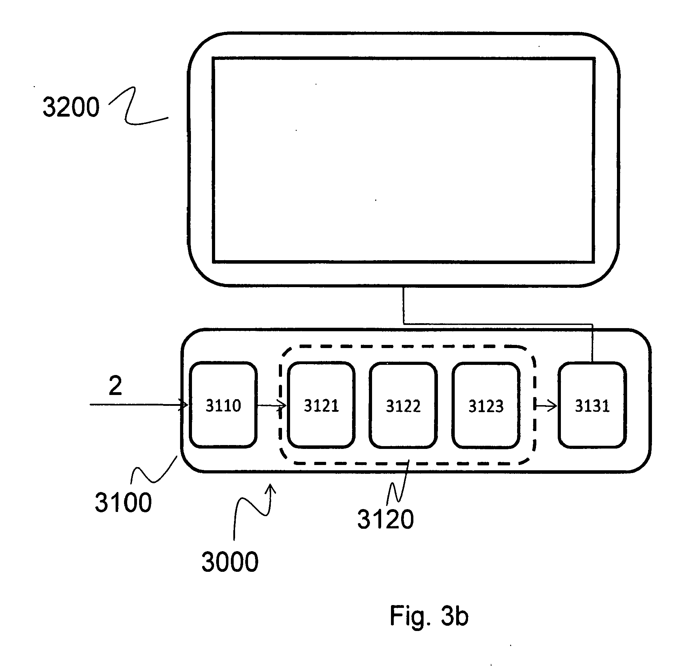

In a further embodiment, shown in Fig. 3b, the decoder 3100 differs from the one shown in Fig. 3a in that it does not include the extraction unit 3124. In this embodiment, the decoder only decodes the video stream without extracting the right and left images, which remain multiplexed in composite images.

The latter are transmitted by an interface 3131, which is similar to the interface 3130, but outputs a single video stream whose frames contain the decompressed composite images. In this embodiment, the extraction of the right and left images is a task performed by the display device 3200, which is for this purpose equipped with suitable means.

The following will describe a number of variants of the system of Fig. 2, all of which are suited to generating and distributing video streams in accordance with the present invention.

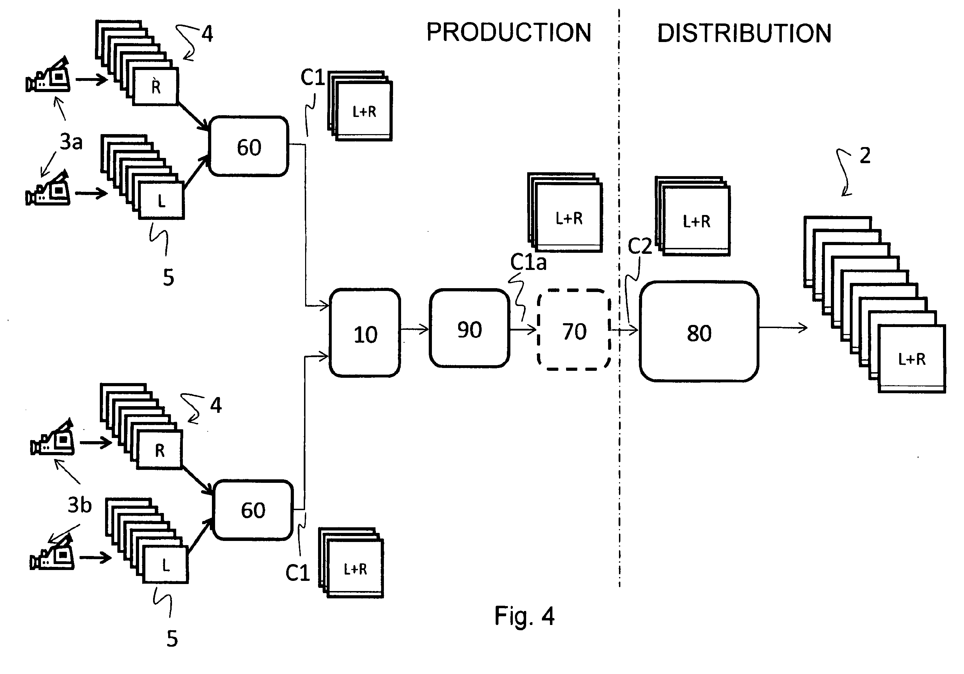

In the example of Fig. 4, the video cameras generate images consisting of 1080x1920 pixels, and the multiplexer 60 generates a sequence of frames C1 consisting of 1088x1920 pixel matrices, wherein the composite image occupies the first 1080 lines and the pixels of the last eight lines are, for example, all black or grey.

In particular, the eight additional lines that allow the information and/or application data to be transported are created in the board of the multiplexer 60, which receives the two right and left video streams and outputs the stereoscopic video stream containing the composite images C1.

The frame C1 generated by the different multiplexers 60 of the system are received by the direction mixer 10, which then outputs a sequence of images of 1088x1920 pixels in size which are compatible with the format required for H.264 compression.

The eight lines of C1 which contain information not to be displayed (i.e. which do not contain the composite image) are therefore created during the production stage and are already used at this stage for transporting data which is entered at the output of the mixer 10 through a signalling data entry system 90. Like the means 9 of Fig. 2, the system 90 allows an operator to manually enter (e.g. through a computer or a keyboard) the information and/or application data. This data is entered into one or more of the eight lines added to the composite image C1 at the multiplexing stage. The system 90 thus outputs 1088x1920 frames C1a, wherein 1080 lines contain visual information, i.e. the image to be displayed, and the remaining eight lines contain non-visual information (i.e. not to be displayed), which includes the data entered by the system 90.

The images C1a outputted by the system 90 can be processed by the editing and post-production system 70 (indicated by a dashed line 4, since it may be omitted) and modified into images C2, still maintaining a size of 1088x1920 pixels.

The system 70 is similar to the system 7, the only difference being that it can manage 1088x1920 pixel images.

The images C1a, possibly modified by the system 70 into images C2, are received by the encoder 80 (preferably of the H.264 type), which compresses them and generates the stereoscopic video stream 2. Unlike the example of Fig. 2, in which the information and/or application data was entered into the frame when encoding the video stream, in the example of Fig. 4 the data is entered at the production stage.

Preferably, if the information and/or application data is entered at the production stage, then this data may be of various kinds and have different functions. In particular, such data is used by the decoder to reconstruct the right and left images, and therefore it may in particular include frame packaging information (i.e. information about the arrangement of the right and left images in the composite image), but it may also contain information about the shooting parameters. Since the images taken by a video camera can be combined with images generated by using computer graphics methods, the information and/or application data may comprise a piece of information about how the video camera shooting was performed, so as to ensure a proper matching between real and artificial images. For example, said piece of information may relate to the distance between the two (right and left) video cameras, which is not always equal to the average distance between the human eyes; also, said piece of information may indicate if the two video cameras are parallel or converging (in some cases there is imitation of the behaviour of human eyes, which tend to converge when focusing a near object).

The pieces of information described above are also useful for verifying that, when two images coming from different sources are combined together, which sources may not necessarily be computers but also video cameras, the resulting image is, as it were, "coherent" and thus pleasant to see. In fact, combining together images produced with different shooting parameters may lead to strange, unpleasant effects.

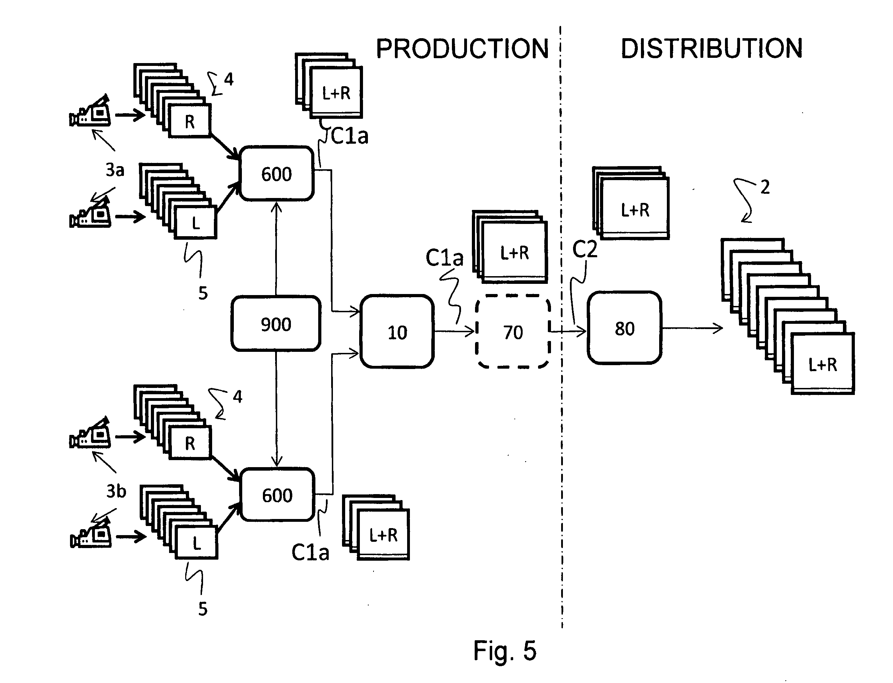

Fig. 5 shows a variant of the example of Fig. 4, wherein the multiplexer 600, in addition to using a greater number of lines than necessary for entering the composite image (formatted in a predefined format, e.g. 1080 lines and 1920 columns), also enters into the additional lines the information and/or application data.

One or more data entry systems 900 (only one in the example of Fig. 5, but more could be provided, up to one per multiplexer) are connected to the multiplexers 600 and provide the information and/or application data to be entered into non-visible lines of the frame C1a at the output of the multiplexer 600. This data may be of the same type as the data entered by the system 90 of Fig. 4. In this way, the frames C1a outputted by the multiplexer 600 will substantially correspond to those outputted by the system 90 of Fig. 4 and can be treated in the same manner through compression and, possibly, editing and post-production processes.

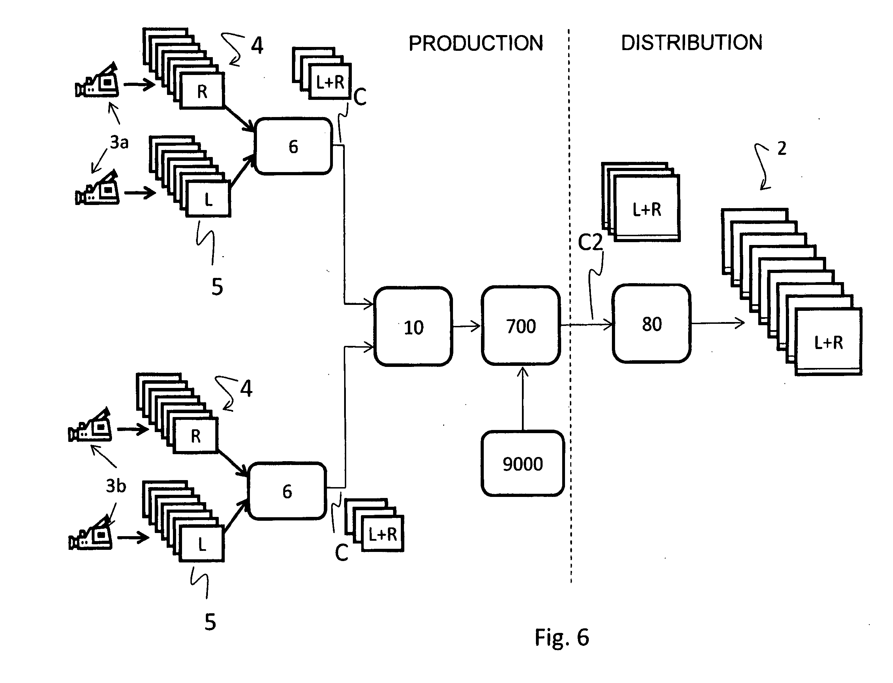

In the example of Fig. 6, the multiplexer 6 is of the same type as that shown in Fig. 2; it therefore receives the video streams from the video cameras and combines them into a stereoscopic video stream whose frames contain composite images.

The eight lines for the information and/or application data are generated by the editing and post-production system 70, which thus generates a sequence of frames containing both the composite image and the information and/or application data. The latter is generated by using the information provided by the means 9000, similar to the means 90 described with reference to Fig. 4.

As in the example of Fig. 2, the encoder 80 compresses the sequence of frames C2 and outputs them for recording and/or transmission.

In a further embodiment, not shown in the drawings, the eight lines for the information and/or application data are added to the composite image by the editing system, but the information and/or application data is entered into these eight lines at encoder level, e.g. through means of the type described with reference to Fig. 2.

In yet another embodiment, the data used as information and/or application data is obtained automatically from metadata associated with the video streams generated by the video cameras or with the video stream outputted by the multiplexer or with the video stream outputted by the editing and post-production system. This solution turns out to be particularly advantageous in that it requires no manually entry. Such a solution also appears to be advantageous because many of the tools used for the professional production of audiovisual contents, ranging from acquisition systems (video cameras) to transport systems (file formats, e.g. MXF - Material Exchange Format) and workflow management/filing systems (Digital Asset Management), make use of metadata for noting and describing the "essences" (i.e. the actual video signals); therefore, this metadata is often available to the board that produces the stereoscopic stream or to the encoder.

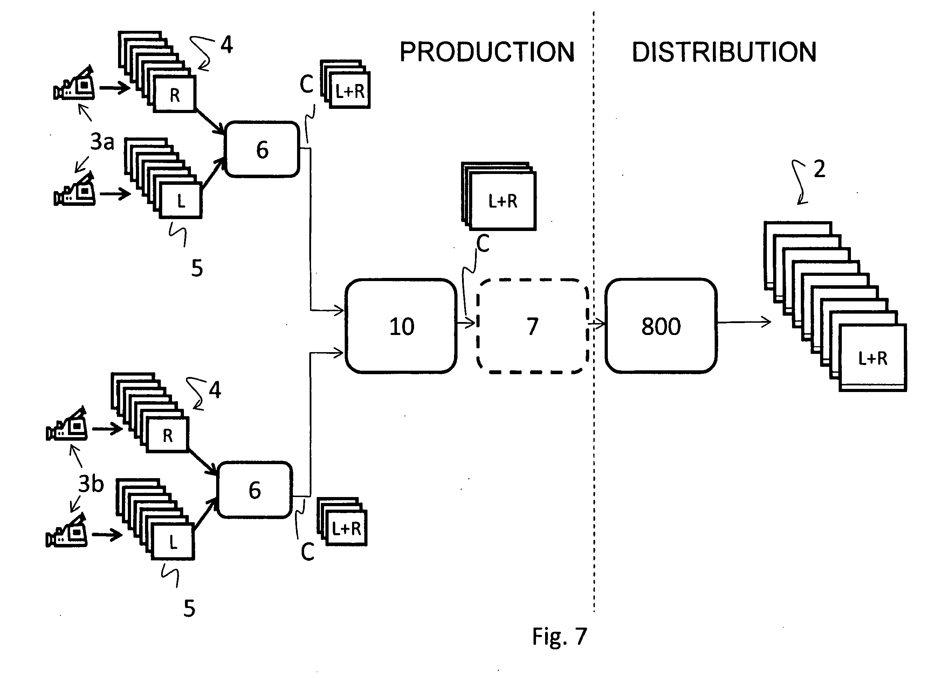

For better clarity and with no limitation whatsoever, Fig. 7 shows the system of Fig. 2 wherein the information relating to the information and/or application data is entered automatically without requiring the insertion means 9. The encoder 800 receives at its input the composite image C and the associated metadata, and then extracts the metadata and processes it to generate the information and/or application data to be entered into the eight lines added to the composite image and transmitted in the frame of the stereoscopic video stream.

It must be pointed out that complex processing activities may take place in the production environment, such as, for example, combining images from different sources, wherein some images come from an archive or from a different broadcaster using a different frame packaging format (packaging of the two right and left images in the composite image). In this latter case, a format conversion will be necessary in order to combine the images together.

The use of the information and/or application data as proposed above (which specifies the frame packaging format) on all video signals circulating in the production environment allows the conversion process to be automated.

The resulting video stream exiting the production environment and going to the distribution environment will have a single frame packaging format with the associated signalling.

In the above-described examples, the right and left images acquired by the two video cameras 3a or 3b are immediately combined into a composite image.

However, this is not essential for the purposes of the present invention, and the right and left image sequences may travel separately to the encoder.

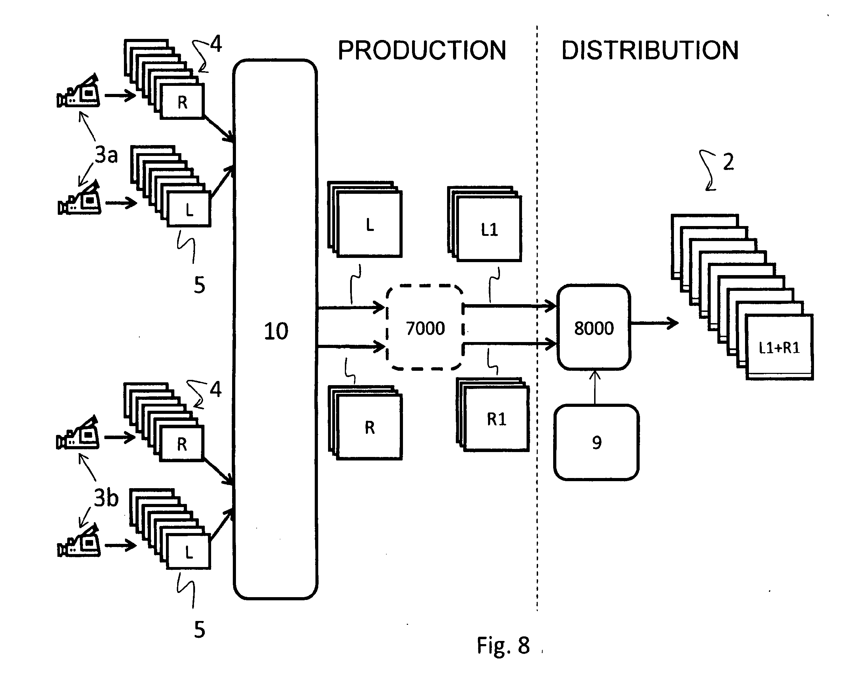

This is shown by way of example in Fig. 8, wherein the right and left images acquired by the pairs of video cameras 3a and 3b are received by the direction mixer 10, which outputs two separate video streams for the right and left images.

The right and left images selected by the direction mixer 10 are sent to the editing and post-production system 7000, where they are processed, e.g. with the addition of special effects. Alternatively, the images are sent directly to the encoder/multiplexer 8000. If present, the editing and post-production system 7000 will separately send the two right and left video streams to the encoder/multiplexer 8000.

The latter combines the input video streams into a single stereoscopic video stream 2, whose frames contain a composite image plus the information and/or application data (which in this example is received from the insertion means 9, but may alternatively be obtained automatically as described above) placed in a certain number of lines (in particular eight) not carrying visual information, i.e. information to be displayed. The encoder/multiplexer 8000 may, for example, combine the right and left images according to any format (top-bottom, side-by-side, etc.) and then encode them according to the H.264 coding.

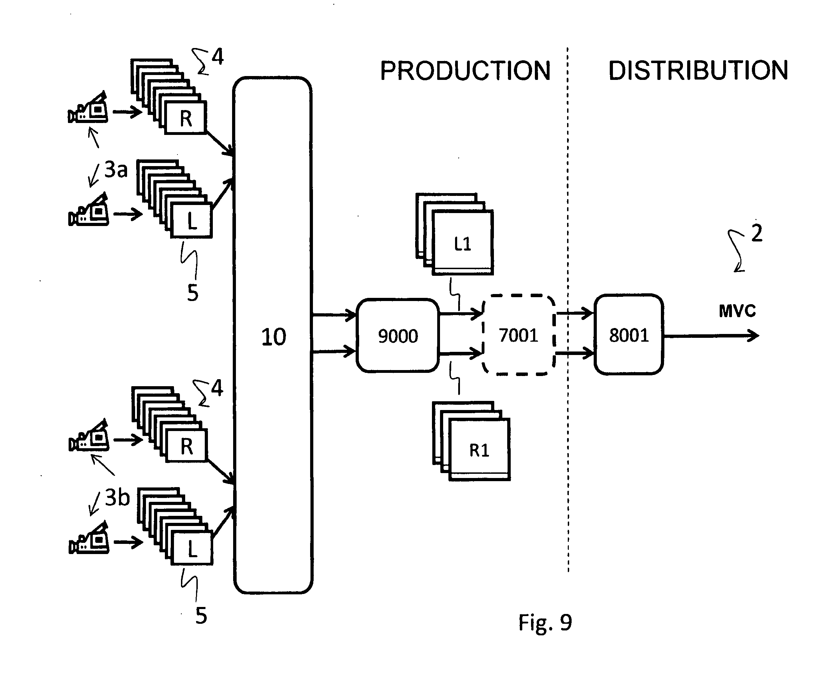

In a further embodiment, described herein with reference to Fig. 9, the encoder 8001 encodes the stereoscopic stream according to MVC (Multi View Coding), described in appendix H of the H.264 standard. Instead of generating an actual composite image, this standard provides for transmitting a base image (base layer), e.g. the right image, and the difference between the right image and the left image (enhancement layer). One possible example of this technique is the so-called 2D plus Delta coding. In the present embodiment, the information and/or application data relating to frame packaging is not necessary because there is no frame packaging. Moreover, the H.264 compressed signal contains all the necessary metadata, so that it is not strictly necessary to use the eight additional lines for entering information useful to the display device. However, the inventors observed that in this case entering a signalling into the images of either or both layers appears to be useful and advantageous. In particular, it is advantageous to enter information and/or application data at production level.

In the example of Fig. 9, the video streams outputted by the mixer 10 are received by the data entry system 9000, which increases the number of lines of each frame of the input video streams and enters information and/or application data into the added lines. Preferably, the video cameras generate video streams with frames of 1080x1920 pixels in size, which the system 9000 increases to 1088x1920 pixels; the information and/or application data is then entered into the added lines. This data may indicate whether the image contained in the frame relates to an image intended for the right or the left eye, and may provide information about how the image was acquired (e.g. spatial relationships between the two video cameras of one pair), the image format (4:3 or 16:9), etc. Such information is preferably also preserved in the distribution environment, since it often happens that, after many years have passed since a program was produced, the high-quality master is no longer available and therefore, if that program is to be recovered to be used in, for instance, a so-called "nostalgia program", it will be useful to know the shooting parameters so that said old program can be properly combined with newer contents.

The system 9000 may automatically obtain the data from the input video streams as described above, or else it may receive it from a suitable data entry peripheral controlled by an operator, who manually enters the data.

The images modified by the data entry system 9000 can be sent to the encoder 8001 or (if present) to the editing and post-production system as shown in Fig. 9.

From the above-described examples it is apparent that the stereoscopic video stream 2 generated with the method according to the present invention comprises useful visual information (composite image or MVC images) and information and/or application data entered into an area of the frame not containing any useful visual information.

In one embodiment, the information and/or application data is entered into all the frames of the stereoscopic video stream.

In another embodiment, the information and/or application data is only entered into some of the frames of the stereoscopic video stream. Preferably, in the frames not containing any information and/or application data, the lines not containing any useful visual information are filled with pixels of the same colour, in particular grey or black. Likewise, also in those frames that contain such data, the additional lines (or portions thereof) not used for the data preferably contain pixels of the same colour, in particular black or grey.

The information and/or application data, whether contained in all the frames or only in a portion thereof, can be used by the decoder to decode the signal and correctly reconstruct the right and left images for display.

When it receives the stereoscopic stream 2, e.g. compressed according to the H.264 coding, the decoder decompresses it and extracts the information/application data from the frames. Subsequently, the information contained in said data can be used for extracting and/or reconstructing the images transported by the video stream. In particular, this data may be useful for reconstructing the right and left images, so that the latter can be supplied to a display system, e.g. a television set or a video projector, which will present them in a manner such that the 3D contents can be properly enjoyed by the spectator.

In one embodiment, the decoder knows the presentation format, i.e. the format required at the input of the display device, which may or may not correspond to the one used for display (e.g. line alternation, frame alternation, etc.). In this case, the decoder can, if necessary, carry out a conversion from the transport format to the presentation format based on the information and/or application data entered into the additional lines.

In a first embodiment, the decoder knows the format required at the input of the display device, since this information was programmed and entered permanently, e.g. into a dedicated memory area, when either the decoder or the display device was manufactured. This solution is particularly advantageous when the decoder is built in the display device, and is therefore strictly associated therewith.

In another embodiment, the presentation format information is transmitted by the display device to the decoder, which will load it into a dedicated memory area. This is particularly advantageous whenever the decoder is a device distinct from the display device and is easily associable therewith by means of an interface that allows bidirectional data exchange. The 3D contents can thus be displayed correctly with no risk of errors and without requiring the user's intervention.

In another embodiment, such information is provided manually to the decoder by a user.

The features and advantages of the present invention are apparent from the above description of a few embodiments thereof, the protection scope of the invention being defined by the appended claims. It is therefore clear that a man skilled in the art may make many changes and variations to the above-described methods and systems for transporting data within video streams and for decoding the latter.

It is apparent that the system described herein is also applicable to other non-professional apparatuses or models for the production and distribution of 2D or 3D video contents like the ones described in detail below. For example, the image acquisition device implementing the invention may be incorporated into a photo camera, a video camera or a mobile telephone adapted to capture video images and store them into a mass memory for subsequently displaying them on the very same apparatus or on different apparatuses.

To this end, the captured video stream may be transferred to a different reproduction and visualisation apparatus (e.g. a PC with a monitor, a television set, a portable multimedia player, etc.) in different ways (e.g. by transferring the data storage medium from one apparatus to another, through a wireless or wired LAN network, via Internet, via Bluetooth, by transmission as MMS over a cellular network, etc.). In this frame as well, the same schematic model consisting of production, distribution and fruition of video contents as illustrated herein still applies, the technical problem addressed is the same, and the same technical solution of the present invention can be applied with only a few changes which will be obvious to those skilled in the art.

Furthermore, a technician may combine together features of different methods, systems and devices among those described above with reference to different embodiments of the invention.

In particular, it is apparent that the various steps of the method for generating the video stream (editing, multiplexing, coding, etc.) can be implemented through separate devices or through devices integrated and/or connected together by any means. For example, the two video cameras and the multiplexer that receives the acquired videos may be included in a single stereoscopic video camera fitted with one or more lenses.

More in general, it must be underlined that it is possible and advantageous to provide a system for entering data into a video stream which comprises:
- an input unit for receiving one or more video streams,
- a processing unit for generating frames containing the images of said one or more video streams, said frames containing a number of pixels which is greater than the number of pixels of said source images,
- acquisition means adapted to acquire information and/or application data to be entered into said frames and insertion means adapted to enter said information and/or application data into pixels of said frames which are not occupied by said images. Said pixels may occupy peripheral lines and/or columns of said frames.

The units and means of this system may also be integrated into a single apparatus or belong to different apparatuses.

It must be pointed out that the embodiments illustrated herein relate to the 1920x1080 format, i.e. the most common format which, in H.264 coding, requires an increase in the size of the coded image. This situation may arise and be likewise exploited also for different image formats and for different coding systems.

The invention has been described herein only with reference to H.264 coding, but it is equally applicable to other video compression techniques that require an increase in the size of the image to be supplied to the encoder, e.g. because the original size does not allow the image to be broken up into a whole number of macroblocks, or for any other reason. Such a situation may arise, for example, in the successors of H.264 coding currently being studied and developed (like the so-called H.265/HVC). It is likewise apparent that, depending on the frame format, the information and/or application data may be entered into any lines and/or columns of the frame, provided that they contain no visual information, i.e. pixels of the image to be displayed.

The information and/or application data may transport information of various kinds, even not pertaining to the formatting of the stereoscopic image and/or to the stereoscopic shooting mode. For example, the information and/or application data may be used for signalling the intended use of the video stream, so as to allow it to be decoded only by decoders located or distributed in a given region of the world, e.g. only in the USA or only in Europe. The information and/or application data may therefore carry any type of information, whether or not correlated to the images into which they are entered, and be used, for example, for applications executable at decoder or display device level. Furthermore, although in the above-described embodiments the frames that carry the information and/or application data contain stereoscopic images, it is clear from the above description that the invention is likewise applicable to 2D images or to so-called "multiview" representations. In fact, information and/or application data may be entered into frame lines and/or columns not containing any pixels of images to be displayed in digital 2D video streams as well.

## Claims

1. A method for transporting data within a digital video stream, wherein said digital video stream comprises information and/or application data not intended for display and at least one frame comprising an image to be displayed, the method being **characterised in that** it comprises the steps of:
- inserting said image into said frame;
- adding lines and/or columns to said frame in order to obtain a larger frame which is larger than said frame, wherein said larger frame is sized in a manner such that it can be broken up into a whole number of macroblocks, the macroblock size depending on the coding algorithm used for encoding said video stream;
- inserting said information and/or application data into said added lines and/or columns; and
- encoding said larger frame according to said coding algorithm by an encoder.

2. A method according to claim 1, wherein said lines and/or columns are added by the same device which inserts said data, or said lines and/or columns are added by a distinct device other than the one which enters said data.

3. A method according to claim 1, wherein said added lines and/or columns are peripheral lines and/or columns of said larger frame, or said added lines and/or columns are adjacent lines and/or columns of said larger frame.

4. A method according to claim 1, wherein said information and/or application data occupies all or only a portion of the added lines and/or columns.

5. A method according to claim 1, wherein said image to be displayed is a composite image of a stereoscopic video stream.

6. A method according to claim 1, wherein said image is either a right image or a left image of a stereoscopic image pain, and wherein said video stream comprises at least a second frame containing the difference between said right and left images.

7. A method according to claim 1, wherein said lines and/or columns are added by a device located upstream of said encoder that compresses said video stream.

8. A method according to claim 1, wherein said data is entered by said encoder that compresses said video stream, or wherein said data is adapted to allow the video stream frame format to be automatically processed and/or converted from a transport format into a presentation format, or said data relates to the format of said image, and in particular comprises one or more data items among those included in the group consisting of:
identifier indicating whether the image is a 2D or 3D image, aspect ratio, frame packaging,
shooting mode, or said data is entered automatically, or said data is entered manually by an operator, or said data is obtained from metadata associated with a video stream from which said image is obtained.

9. A method according to claim 8, wherein said encoder enters metadata into said video stream, said metadata comprising a piece of information adapted to indicate the presence of data in said added lines and/or columns.

10. A device for entering data into a video stream, comprising:
- an input unit for receiving an image;
- a processing unit for generating a frame of said video stream, said frame containing said image;
**characterised by** comprising acquisition means adapted to acquire information and/or application data to be entered into said video stream and insertion means, wherein said input unit is adapted to receive a frame containing said image, wherein said processing unit is adapted to add lines and/or columns to said frame in order to obtain a larger frame which is larger than said frame, and wherein said insertion means are adapted to enter said information and/or application data into said added lines and/or columns; the device further comprising encoding means for encoding said video stream according to a coding algorithm, and wherein said larger frame is sized in a manner such that it can be broken up into a whole number of macroblocks, the size of said macroblocks depending on said coding algorithm, said larger frame being encoded according to said coding algorithm.

11. A device according to claim 10, wherein said added lines and/or columns are peripheral and/or adjacent lines and/or columns of said larger frame.

12. A device according to claim 10, wherein said information and/or application data occupies all or only a portion of the added lines and/or columns.

13. A device according to claim 10, wherein said acquisition means are adapted to obtain said information and/or application data from metadata associated with a video stream from which said image is obtained.

14. A device according to claim 10, further comprising an interface for connection to a manually-operated data entry unit.

15. A device according to any one of claims 10 to 14, wherein said encoding means is adapted to enter metadata into the encoded video stream, said metadata comprising a piece of information adapted to indicate the presence of data in said added lines and/or columns.

16. A multiplexer device comprising a device according to any one of claims 10 to 15.

17. An image acquisition apparatus, in particular a video camera or a photo camera, comprising a device according to any one of claims 10 to 15.

18. A digital video stream comprising information and/or application data not intended for display and at least one frame comprising an image to be displayed, **characterised in that**:
- said image is inserted into said frame;
- lines and/or columns are added to said frame in order to obtain a larger frame which is larger than said frame, wherein said larger frame is sized in a manner such that it can be broken up into a whole number of macroblocks, the macroblock size depending on the coding algorithm used for encoding said video stream;
- said information and/or application data is inserted into said added lines and/or columns; and
- said larger frame is encoded according to said coding algorithm.

19. A video stream according to claim 18, wherein said image is a composite stereoscopic image comprising a right image and a left image multiplexed together.

20. A video stream according to claim 18, wherein said video stream is encoded according to the ITU-T H.264 coding standard, "H.264 Advanced video coding for generic audiovisual services", or said video stream is encoded according to Appendix H of the ITU-T H.264 coding standard, "H.264 Advanced video coding for generic audiovisual services".

21. A video stream according to claim 18, wherein said data is placed in peripheral lines and/or columns of said at least one frame.

22. A video stream according to claim 18, further comprising metadata containing a piece of information adapted to indicate the presence of data in said pixels of said frame which are not occupied by said image.

23. A method for decoding a video stream, wherein said video stream is a video stream according to any one of claims 18 to 22, and wherein the method comprises the steps of:
- extracting said information and/or application data;
- extracting said image from the frame;
- extracting said lines and/or columns added to said frame, so as to get said larger frame;
- extracting said information and/or application data inserted into said larger frame.

24. A method according to claim 23, wherein said information and/or application data is extracted by using information contained in metadata entered into said video stream, or said information and/or application data is encoded by means of pixel values, and wherein the method comprises the steps of:
- searching, among said additional lines and/or columns, for those which contain non-uniform pixels,
- extracting said information and/or application data from said lines and/or columns containing non-uniform pixels.

25. A method according to claim 24, further comprising the steps of:
finding, in particular by means of cropping window information, lines and/or columns of the frame to be cropped,
searching for said information and/or application data in said lines and/or columns to be cropped,
extracting said information and/or application data.

26. A method according to claim 23, wherein said video stream is a stereoscopic video stream, in particular comprising at least one composite image or one pair of right and left images.

27. A method according to claim 23, wherein the frames of said video stream to be decoded are in a transport format, and wherein said transport format is determined on the basis of said extracted data, and the format of the frames of said video stream is automatically converted from said transport format into a presentation format.

28. A device for decoding a stereoscopic video stream, **characterised by** comprising means adapted to implement the method according to any one of claims 23 to 27:
- means for extracting said information and/or application data;
- means for extracting said image from the frame;
- means for extracting said lines and/or columns added to said frame, so as to get said larger frame;
- means for extracting said information and/or application data inserted into said larger frame.

29. A device for displaying a video stream adapted to implement a method according to claims 23 to 27.

30. A device for converting the format of frames of an input video stream into a format of frames of an output video stream intended for display on a display device, **characterised by** comprising means adapted to convert said input video stream into said output video stream on the basis of information and/or application data entered into said input video stream in accordance with the method of any one of claims 1 to 9.

31. A device according to claim 30, wherein the device acquires knowledge of the format to be used at the input of the display device based on settings entered when the device is manufactured or assembled, or the device acquires knowledge of the presentation format to be used at the input of the display device based on information received from said display device, or the device acquires knowledge of the presentation format to be used at the input of the display device based on information entered manually by a user.

## Patentansprüche

1. Verfahren zum Transportieren von Daten innerhalb eines digitalen Videostroms, wobei der digitale Videostrom Informationsdaten und/oder Anwendungsdaten, die nicht zur Darstellung vorgesehen sind, und mindestens ein Einzelbild mit einem darzustellenden Bild umfasst, wobei das Verfahren folgende Schritte umfasst:
- Einfügen des Bildes in das Einzelbild;
- Hinzufügen von Reihen und/oder Spalten in das Einzelbild, um ein größeres Einzelbild zu erhalten, das größer als das Einzelbild ist, wobei das größere Einzelbild derartig bemessen ist, um das größere Einzelbild in eine ganzzahlige Anzahl von Makroblöcken teilen zu können, wobei die Größe der Makroblöcke abhängig von einem Kodieralgorithmus zum Kodieren des Videostroms ist;
- Einfügen der Informationsdaten und/oder Anwendungsdaten in die hinzugefügten Reihen oder Spalten;
- Kodieren des größeren Einzelbildes gemäß dem Kodieralgorithmus mittels eines Kodierers.

2. Verfahren nach Anspruch 1, wobei die Reihen und/oder Spalten mittels der gleichen Vorrichtung, die die Daten einfügt, hinzugefügt werden oder die Reihen und/oder Spalten von einer sich unterscheidenenden Vorrichtung, die eine andere als die Vorrichtung ist, die die Daten einfügt, eingefügt werden.

3. Verfahren nach Anspruch 1, wobei die hinzugefügten Reihen und/oder Spalten periphäre Reihen und/oder Spalten des größeren Einzelbilds sind oder die hinzugefügten Reihen und/oder Spalten benachbarte Reihen und/oder Spalten des größeren Einzelbilds sind.

4. Verfahren nach Anspruch 1, wobei die Informationsdaten und/oder Anwendungsdaten alle oder nur einen Teil der hinzugefügten Reihen und/oder Spalten belegen.

5. Verfahren nach Anspruch 1, wobei das darzustellende Bild ein zusammengesetztes Bild eines stereoskopischen Videostroms ist.

6. Verfahren nach Anspruch 1, wobei das Bild entweder das rechte Bild oder das linke Bild eines stereoskopischen Bildpaares ist und wobei der Videostrom mindestens ein zweites Einzelbild umfasst, das die Differenz zwischen dem rechten und linken Bild umfasst.

7. Verfahren nach Anspruch 1, wobei die Reihen und/oder Spalten mittels einer Vorrichtung eingefügt werden, die im Datenstrom oberhalb des Kodierers, der den Videostrom komprimiert, angeordnet ist.

8. Verfahren nach Anspruch 1, wobei die Daten durch den Kodierer, der den Videostrom komprimiert, eingefügt werden oder wobei die Daten eingerichtet sind, um das Einzelbildformat des Videostroms automatisch von einem Transportformat in ein Präsentationsformat zu verarbeiten und/oder konvertieren, oder wobei sich die Daten auf das Format des Bildes beziehen und insbesondere ein oder mehrere Datenelemente, die in der folgenden Gruppe enthalten sind, umfassen:
Bezeichner, die aufzeigen, ob das Bild ein 2D- oder 3D-Bild ist, Bildseitenverhältnis, Einzelbildpackung, Aufnahmemodus, dass die Daten automatisch eingefügt sind oder dass die Daten manuell durch einen Bediener eingefügt sind oder die Daten von Metadaten erhalten werden, die mit einem Videostrom, aus dem das Bild erhalten wurde, assoziiert sind.

9. Verfahren nach Anspruch 8, wobei der Kodierer die Metadaten in den Videostrom einfügt und die Metadaten einen Teil von Informationen enthalten, um das Vorhandensein der Daten in den Reihen und/oder Spalten anzuzeigen.

10. Vorrichtung zum Einfügen von Daten in einen Videostrom, umfassend:
- eine Eingabeeinheit zum Empfangen eines Bildes;
- eine Verarbeitungseinheit zum Generieren eines Einzelbildes eines Videostroms, wobei das Einzelbild das Bild enthält;
**gekennzeichnet durch** Erfassungsmittel, die eingerichtet sind, Informationsdaten und/oder Anwendungsdaten zum Einfügen in den Videostrom zu erfassen und Einfügemittel, wobei die Eingabeeinheit eingerichtet ist, ein Einzelbild, umfassend das Bild, zu empfangen, und wobei die Verarbeitungseinheit eingerichtet ist, Reihen und/oder Spalten in das Einzelbild einzufügen, um ein größeres Einzelbild zu erhalten, das größer ist als das Einzelbild und wobei die Einfügemittel eingerichtet sind, Informationsdaten und/oder Anwendungsdaten in die hinzugefügten Reihen und/oder Spalten einzufügen;
und wobei die Vorrichtung ferner Kodiermittel zum Kodieren des Videostroms gemäß einem Kodieralgorithmus umfasst und wobei das größere Einzelbild bemessen ist, um das größere Einzelbild in eine ganzzahlige Anzahl von Makroblöcken teilen zu können, wobei die Anzahl der Makroblöcke abhängig vom Kodieralgorithmus ist, mittels dem das größere Einzelbild kodiert ist.

11. Vorrichtung nach Anspruch 10, wobei die hinzugefügten Reihen und/oder Spalten periphäre und/oder benachbarte Reihen und/oder Spalten des größeren Einzelbilds sind.

12. Vorrichtung nach Anspruch 10, wobei die Informationsdaten und/oder Anwendungsdaten alle oder nur einen Teil der hinzugefügten Reihen und/oder Spalten belegen.

13. Vorrichtung nach Anspruch 10, wobei die Erfassungsmittel eingerichtet sind, die Informationsdaten und/oder Anwendungsdaten von Metadaten, die mit dem Videostrom assoziiert sind, aus dem das Bild erhalten wurde, zu gewinnen.

14. Vorrichtung nach Anspruch 10, ferner umfassend eine Schnittstelle zum Verbinden mit einer manuell betriebenen Dateneingabeeinheit.

15. Vorrichtung nach einem der vorhergehenden Ansprüche 10 bis 14, wobei die Kodierungsmittel eingerichtet sind, Metadaten in den kodierten Videostrom einzufügen, wobei die Metadaten einen Teil von Informationen enthalten, um das Vorhandensein von Daten in den hinzugefügten Reihen und/oder Spalten anzuzeigen.

16. Eine Multiplexereinheit umfassend eine Vorrichtung nach einem der vorhergehenden Ansprüche 10 bis 15.

17. Eine Bilderfassungsvorrichtung, insbesondere eine Videokamera oder eine Fotokamera, umfassend eine Vorrichtung nach einem der Ansprüche 10 bis 15.

18. Ein digitaler Videostrom umfassend Informationsdaten und/oder Anwendungsdaten, die nicht für die Darstellung vorgesehen sind, und mindestens ein Einzelbild umfassend ein darzustellendes Bild, **dadurch gekennzeichnet, dass**
- das Bild in das Einzelbild eingefügt ist;
- Reihen und/oder Spalten zum Einzelbild hinzugefügt sind, um ein größeres Einzelbild zu erhalten, das größer ist als das Einzelbild, wobei das größere Einzelbild bemessen ist, um in eine ganzzahlige Anzahl von Makroblöcken geteilt zu werden, wobei die Größe eine Makroblocks abhängig vom Kodierungsalgorithmus zur Kodierung des Videostroms ist;
- die Informationsdaten und/oder Anwendungsdaten in die hinzugefügten Reihen und/oder Spalten eingefügt sind und
- das größere Einzelbild mit dem Kodieralgorithmus kodiert ist.

19. Videostrom nach Anspruch 18, wobei das Bild ein zusammengefügtes stereoskopisches Bild ist, das ein rechtes Bild und ein linkes Bild, die miteinander gebündelt sind, umfasst.

20. Videostrom nach Anspruch 18, wobei der Videostrom nach ITU-T H.264 Kodierungsstandard, "H.264 advanced video coding for generic audio visual services" oder nach dem Anhang H des ITU-T H.264 Kodierungsstandard oder "H.264 advanced video coding for generic audio visual services" kodiert sind.

21. Videostrom nach Anspruch 18, wobei die Daten in periphären Reihen und/oder Spalten mindestens eines Einzelbilds angeordnet sind.

22. Videostrom nach Anspruch 18, ferner umfassend Metadaten, die einen Teil von Informationen umfassen, die eingerichtet sind, das Vorhandensein von Daten in den Bildpunkten des Einzelbilds anzuzeigen, die nicht vom Bild belegt sind.

23. Verfahren zum Dekodieren eines Videostroms, wobei der Videostrom ein Videostrom nach einem der vorherigen Ansprüche 18 bis 22 ist, und wobei das Verfahren folgende Schritte umfasst:
- Extrahieren der Informationsdaten und/oder Anwendungsdaten;
- Extrahieren des Bildes aus dem Einzelbild;
- Extrahieren der Reihen und/oder Spalten, die in das Einzelbild eingefügt sind, um das größere Einzelbild zu erhalten;
- Extrahieren der Informationsdaten und/oder Anwendungsdaten, die in das größere Einzelbild eingefügt sind.

24. Verfahren nach Anspruch 23, wobei die Informationsdaten und/oder Anwendungsdaten extrahiert werden, indem Informationen, die in Metadaten, die in den Videostrom eingefügt sind, enthalten sind oder die Informationsdaten und/oder Anwendungsdaten mittels Bildpunktwerten kodiert sind und wobei das Verfahren die folgenden Schritte umfasst:
- Suchen innerhalb der hinzugefügten Reihen und/oder Spalten nach jenen, die ungleichartige Bildpunkte umfassen,
- Extrahieren der Informationsdaten und/oder Anwendungsdaten aus den Reihen und/oder Spalten umfassend die nicht gleichartigen Bildpunkte.

25. Verfahren nach Anspruch 24, ferner umfassend die folgenden Schritte:
Auffinden, insbesondere mittels Ausschnittsfenster, Informationen von Reihen und/oder Spalten des Einzelbilds zum Ausschneiden,
Suchen nach den Informationsdaten und/oder Anwendungsdaten in den Reihen und/oder Spalten zum Ausschneiden,
Extrahieren der Informationsdaten und/oder Anwendungsdaten.

26. Vorrichtung nach Anspruch 23, wobei der Videostrom ein stereoskopischer Videostrom ist, insbesondere umfassend mindestens ein zusammengesetztes Bild oder ein Paar eines rechten und linken Bildes.

27. Verfahren nach Anspruch 23, wobei die Einzelbilder des zu dekodierenden Videostroms in einem Transportformat vorliegen und wobei das Transportformat auf der Basis der extrahierten Daten bestimmt ist und das Format der Einzelbilder des Videostroms automatisch vom Transportformat in ein Präsentationsformat konvertiert wird.

28. Vorrichtung zum Dekodieren eines stereoskopischen Videostroms, charakterisiert durch das Umfassen von Mitteln, die eingerichtet sind, das Verfahren nach einem der Ansprüche 23 bis 27 auszuführen:
Mittel zum Extrahieren der Informationsdaten und/oder Anwendungsdaten;
Mittel zum Extrahieren des Bilds aus dem Einzelbild;
Mittel zum Extrahieren der Reihen und/oder Spalten, die in das Einzelbild eingefügt sind, um das größere Einzelbild zu erhalten;
Mittel zum Extrahieren der Informationsdaten und/oder Anwendungsdaten, die in das größere Einzelbild hinzugefügt sind.

29. Vorrichtung zum Darstellen eines Videostroms eingerichtet um ein Verfahren der Ansprüche 23 bis 27 auszuführen.

30. Vorrichtung zum Konvertieren des Formats der Einzelbilder eines Eingangsvideostroms in ein Format von Einzelbildern eines Ausgangsvideostroms zur Darstellung mit einer Anzeigevorrichtung, **gekennzeichnet durch** das Umfassen von Mitteln, die eingerichtet sind, den Eingangsvideostrom auf der Basis von Informationsdaten und/oder Anwendungsdaten, die in den Eingangsvideostrom eingefügt sind, zu konvertieren, in Übereinstimmung mit einem Verfahren nach einem der Ansprüche 1 bis 9.

31. Vorrichtung nach Anspruch 30, wobei die Vorrichtung Kenntnis vom Format, das am Eingang der Anzeigevorrichtung verwendet wird, basierend auf Einstellungen, die eingegeben werden, wenn die Vorrichtung hergestellt oder zusammengesetzt wird, erlangt oder die Vorrichtung Kenntnis des Präsentationsformats, das am Eingang der Anzeigevorrichtung genutzt wird, erlangt, basierend auf den Informationen, die von der Anzeigevorrichtung empfangen werden, oder die Vorrichtung Kenntnis vom Präsentationsformat, das am Eingang der Anzeigevorrichtung verwendet wird, erfasst, basierend auf Informationen, die manuell von einem Benutzer eingegeben werden.

## Revendications

1. Procédé de transport de données au sein d'un flux vidéo numérique, dans lequel ledit flux vidéo numérique comprend des informations et/ou des données d'application non destinées à un affichage et au moins une trame comprenant une image à afficher, le procédé étant **caractérisé en ce qu'**il comprend les étapes consistant à :
- insérer ladite image dans ladite trame ;
- ajouter des lignes et/ou des colonnes à ladite trame afin d'obtenir une plus grande trame qui est plus grande que ladite trame, dans lequel ladite plus grande trame est dimensionnée d'une manière telle qu'elle peut être divisée en un nombre entier de macroblocs, la taille de macrobloc dépendant de l'algorithme de codage utilisé pour encoder ledit flux vidéo ;
- insérer lesdites informations et/ou données d'application dans lesdites lignes et/ou colonnes ajoutées ; et
- encoder ladite plus grande trame selon ledit algorithme de codage par un encodeur.

2. Procédé selon la revendication 1, dans lequel lesdites lignes et/ou colonnes sont ajoutées par le même dispositif que celui qui insère lesdites données, ou lesdites lignes et/ou colonnes sont ajoutées par un dispositif distinct autre que celui qui entre lesdites données.

3. Procédé selon la revendication 1, dans lequel lesdites lignes et/ou colonnes ajoutées sont des lignes et/ou colonnes périphériques de ladite plus grande trame, ou lesdites lignes et/ou colonnes ajoutées sont des lignes et/ou colonnes adjacentes de ladite plus grande trame.

4. Procédé selon la revendication 1, dans lequel lesdites informations et/ou des données d'application occupent la totalité ou uniquement une partie des lignes et/ou colonnes ajoutées.

5. Procédé selon la revendication 1, dans lequel ladite image à afficher est une image composite d'un flux vidéo stéréoscopique.

6. Procédé selon la revendication 1, dans lequel ladite image est soit une image droite soit une image gauche d'une paire d'images stéréoscopiques, et dans lequel ledit flux vidéo comprend au moins une seconde trame contenant la différence entre lesdites images gauche et droite.

7. Procédé selon la revendication 1, dans lequel lesdites lignes et/ou colonnes sont ajoutées par un dispositif situé en amont dudit encodeur qui compresse ledit flux vidéo.

8. Procédé selon la revendication 1, dans lequel lesdites données sont entrées par ledit encodeur qui compresse ledit flux vidéo, ou dans lequel lesdites données sont adaptées pour permettre le traitement et/ou la conversion automatique du format de trame de flux vidéo d'un format de transport en un format de présentation, ou lesdites données se rapportent au format de ladite image, et en particulier comprennent un ou plusieurs articles de données parmi ceux inclus dans le groupe consistant en : un identifiant indiquant si l'image est une image 2D ou 3D, le rapport de format, l'intégration de trame, le mode de prise de vue, ou lesdites données sont entrées automatiquement, ou lesdites données sont entrées manuellement par un opérateur, ou lesdites données sont obtenues à partir de métadonnées associées à un flux vidéo à partir duquel ladite image est obtenue.

9. Procédé selon la revendication 8, dans lequel ledit encodeur entre des métadonnées dans ledit flux vidéo, lesdites métadonnées comprenant une information adaptée pour indiquer la présence de données dans lesdites lignes et/ou colonnes ajoutées.

10. Dispositif d'entrée de données dans un flux vidéo, comprenant :
- une unité d'entrée permettant de recevoir une image ;
- une unité de traitement permettant de générer une trame dudit flux vidéo, ladite trame contenant ladite image ;
**caractérisé en ce qu'**il comprend des moyens d'acquisition adaptés pour acquérir des informations et/ou des données d'application à entrer dans ledit flux vidéo et des moyens d'insertion, dans lequel ladite unité d'entrée est adaptée pour recevoir une trame contenant ladite image, dans lequel ladite unité de traitement est adaptée pour ajouter des lignes et/ou des colonnes à ladite trame afin d'obtenir une plus grande trame qui est plus grande que ladite trame, et dans lequel lesdits moyens d'insertion sont adaptés pour entrer lesdites informations et/ou données d'application dans lesdites lignes et/ou colonnes ajoutées ;
le dispositif comprenant en outre un moyen d'encodage permettant d'encoder ledit flux vidéo selon un algorithme de codage, et dans lequel ladite plus grande trame est dimensionnée d'une manière telle qu'elle peut être divisée en un nombre entier de macroblocs, la taille desdits macroblocs dépendant dudit algorithme de codage, ladite plus grande trame étant encodée selon ledit algorithme de codage.

11. Dispositif selon la revendication 10, dans lequel lesdites lignes et/ou colonnes ajoutées sont des lignes et/ou colonnes périphériques et/ou adjacentes de ladite plus grande trame.

12. Dispositif selon la revendication 10, dans lequel lesdites informations et/ou données d'application occupent la totalité ou uniquement une partie desdites lignes et/ou colonnes ajoutées.

13. Dispositif selon la revendication 10, dans lequel lesdits moyens d'acquisition sont adaptés pour obtenir lesdites informations et/ou données d'application à partir de métadonnées associées à un flux vidéo à partir duquel ladite image est obtenue.

14. Dispositif selon la revendication 10, comprenant en outre une interface permettant une connexion à une unité d'entrée de données fonctionnant manuellement.

15. Dispositif selon l'une quelconque des revendications 10 à 14, dans lequel ledit moyen d'encodage est adapté pour entrer des métadonnées dans le flux vidéo encodé, lesdites métadonnées comprenant une information adaptée pour indiquer la présence de données dans lesdites lignes et/ou colonnes ajoutées.

16. Dispositif multiplexeur comprenant un dispositif selon l'une quelconque des revendications 10 à 15.

17. Appareil d'acquisition d'image, en particulier caméra vidéo ou appareil photo, comprenant un dispositif selon l'une quelconque des revendications 10 à 15.

18. Flux vidéo numérique comprenant des informations et/ou des données d'application non destinées à un affichage et au moins une trame comprenant une image à afficher, **caractérisé en ce que** :
- ladite image est insérée dans ladite trame ;
- des lignes et/ou colonnes sont ajoutées à ladite trame afin d'obtenir une plus grande trame qui est plus grande que ladite trame, dans lequel ladite plus grande trame est dimensionnée d'une manière telle qu'elle peut être divisée en un nombre entier de macroblocs, la taille de macrobloc dépendant de l'algorithme de codage utilisé pour encoder ledit flux vidéo ;
- lesdites informations et/ou données d'application sont insérées dans lesdites lignes et/ou colonnes ajoutées ; et
- ladite plus grande trame est encodée selon ledit algorithme de codage.

19. Flux vidéo selon la revendication 18, dans lequel ladite image est une image stéréoscopique composite comprenant une image droite et une image gauche multiplexées ensemble.

20. Flux vidéo selon la revendication 18, dans lequel ledit flux vidéo est encodé selon la norme de codage ITU-T H.264, « H.264 codage vidéo avancé pour services audiovisuels génériques », ou ledit flux vidéo est encodé selon l'Annexe H de la norme de codage ITU-T H.264, « H.264 codage vidéo avancé pour services audiovisuels génériques ».

21. Flux vidéo selon la revendication 18, dans lequel lesdites données sont placées dans des lignes et/ou colonnes périphériques de ladite au moins une trame.

22. Flux vidéo selon la revendication 18, comprenant en outre des métadonnées contenant une information adaptée pour indiquer la présence de données dans lesdits pixels de ladite trame qui ne sont pas occupés par ladite image.

23. Procédé de décodage d'un flux vidéo, dans lequel ledit flux vidéo est un flux vidéo selon l'une quelconque des revendications 18 à 22, et dans lequel le procédé comprend les étapes consistant à :
- extraire lesdites informations et/ou données d'application ;
- extraire ladite image de la trame ;
- extraire lesdites lignes et/ou colonnes ajoutées à ladite trame, de façon à obtenir ladite plus grande trame ;
- extraire lesdites informations et/ou données d'application insérées dans ladite plus grande trame.

24. Procédé selon la revendication 23, dans lequel lesdites informations et/ou données d'application sont extraites en utilisant des informations contenues dans des métadonnées entrées dans ledit flux vidéo, ou lesdites informations et/ou données d'application sont encodées au moyen de valeurs de pixel, et dans lequel le procédé comprend les étapes consistant à :
- rechercher, parmi lesdites lignes et/ou colonnes supplémentaires, celles qui contiennent des pixels non uniformes,
- extraire lesdites informations et/ou données d'application à partir desdites lignes et/ou colonnes contenant des pixels non uniformes.

25. Procédé selon la revendication 24, comprenant en outre les étapes consistant à :
trouver, en particulier au moyen d'informations de fenêtre de rognage, des lignes et/ou des colonnes de la trame à rogner,
rechercher lesdites informations et/ou données d'application dans lesdites lignes et/ou colonnes à rogner,
extraire lesdites informations et/ou données d'application.

26. Procédé selon la revendication 23, dans lequel ledit flux vidéo est un flux vidéo stéréoscopique, comprenant en particulier au moins une image composite ou une paire d'images droite et gauche.

27. Procédé selon la revendication 23, dans lequel les trames dudit flux vidéo à décoder sont dans un format de transport, et dans lequel ledit format de transport est déterminé sur la base desdites données extraites, et le format des trames dudit flux vidéo est converti automatiquement dudit format de transport en un format de présentation.

28. Dispositif de décodage d'un flux vidéo stéréoscopique, **caractérisé en ce qu'**il comprend des moyens adaptés pour implémenter le procédé selon l'une quelconque des revendications 23 à 27 :
- un moyen d'extraction desdites informations extraites et/ou données d'application ;
- un moyen d'extraction de ladite image à partir de la trame ;
- un moyen d'extraction desdites lignes et/ou colonne ajoutées à ladite trame, de façon à obtenir ladite plus grande trame ;
- un moyen d'extraction desdites informations et/ou données d'application insérées dans ladite plus grande trame.

29. Dispositif d'affichage d'un flux vidéo adapté pour implémenter un procédé selon les revendications 23 à 27.

30. Dispositif de conversion du format de trames d'un flux vidéo d'entrée en un format de trames d'un flux vidéo de sortie destiné à un affichage sur un dispositif d'affichage, **caractérisé en ce qu'**il comprend des moyens adaptés pour convertir ledit flux vidéo d'entrée en ledit flux vidéo de sortie sur la base d'informations et/ou de données d'application entrées dans ledit flux vidéo d'entrée en conformité avec le procédé selon l'une quelconque des revendications 1 à 9.

31. Dispositif selon la revendication 30, dans lequel le dispositif acquiert une connaissance du format à utiliser au niveau de l'entrée du dispositif d'affichage sur la base de réglages entrés lorsque le dispositif est fabriqué ou assemblé, ou le dispositif acquiert une connaissance du format de présentation à utiliser au niveau de l'entrée du dispositif d'affichage sur la base d'informations reçues du dispositif d'affichage, ou le dispositif acquiert une connaissance du format de présentation à utiliser au niveau de l'entrée du dispositif d'affichage sur la base d'informations entrées manuellement par un utilisateur.
